# EUROPÄISCHE PATENTANMELDUNG

(11) **EP 1 860 520 A1**
(43) Veröffentlichungstag der Anmeldung: **28.11.2007**
(21) Anmeldenummer: 06010535.0
(22) Anmeldetag: 22.05.2006
(51) Int. Cl.: G06F 1/12

(54) **Taktschläger- und Uhrzeit-Synchronisation zwischen Komponenten von Bussystemen**

(71) Anmelder: SIEMENS AKTIENGESELLSCHAFT, 80333 München (DE)
(72) Erfinder: Klotz, Dr. Dieter, 90768 Fürth (DE); Tretter, Albert, 92712 Pirk (DE)

(57) **Zusammenfassung**

Die Erfindung betrifft ein Verfahren zur Synchronisation der Uhrzeit bzw. der Taktschläger von Komponenten in zumindest zwei gekoppelten Bussystemen. Der Erfindung liegt die Aufgabe zugrunde, ein Verfahren anzugeben, mit dem die Uhrzeit bzw. der Taktschläger von Komponenten in mehreren gekoppelten Bussystemen synchronisiert werden können, wobei der Uhrzeit- bzw. Taktschläger-Master eine beliebige Komponente sein kann. Diese Aufgabe wird dadurch gelöst, dass ein globaler Master zunächst die Komponenten des Bussystems, dem er angehört synchronisiert und dann die bereits synchronisierten Komponenten, die zugleich Bestandteil eines weiteren Bussystems sind, dessen Komponenten noch nicht synchronisiert sind, als lokale Master für das betreffende weitere Bussystem fungieren.

## Beschreibung

Die Erfindung betrifft ein Verfahren zur Synchronisation der Uhrzeit bzw. der Taktschläger von Komponenten in zumindest zwei gekoppelten Bussystemen.

Ein derartiges Verfahren kommt insbesondere in der Automatisierungstechnik zum Einsatz. Ein Beispiel ist die Taktschläger- und Uhrzeit-Synchronisation zwischen Feldbus- und Rückwandbus-Teilnehmern. Insbesondere sollen der Taktschläger und die Uhrzeit von Komponenten von Feldbussen synchronisiert werden, die jeweils ausschließlich über einen Rückwandbus gekoppelt sind. Zudem sollen bei der Taktschläger-Synchronisation beliebige Untersetzungen der Taktschlägerperiode bei den einzelnen Buskomponenten möglich sein.

Die zu lösenden Aufgaben sind somit insbesondere:
a) eine einheitliche Uhrzeit zwischen Komponenten von verschiedenen Feldbussen einzustellen, wobei die einzelnen Feldbusse jeweils ausschließlich über einen Rückwandbus gekoppelt sind. Die Komponente, die die Uhrzeit vorgibt (Uhrzeit-Master), kann hierbei eine beliebige Feldbus- oder Rückwandbus-Komponente sein.
b) die gleichzeitige Erzeugung von zyklischen Impulsen (Taktschläger) in Komponenten von verschiedenen Feldbussen, wobei die einzelnen Feldbusse jeweils ausschließlich über einen Rückwandbus gekoppelt sind. Die Komponente, die den Taktschläger vorgibt (Taktschläger-Master), kann hierbei eine beliebige Feldbus- oder Rückwandbus-Komponente sein.
c) die Möglichkeit, die Taktschläger-Ereignisse bei jeder Feldbus- oder Rückwandbus-Komponente um einen beliebigen Faktor im Bezug zu untersetzen. Z.B.: Der Taktschläger hat einen Zyklus von 200 µs.
   - Komponente 1 von Feldbus 1 generiert mit diesem Takt (d.h. alle 200 µs) einen Impuls einer definierten Länge. Die Untersetzung beträgt also 1:1.
   - Komponente 2 von Feldbus 1 generiert mit jedem n-ten Takt (d.h. alle n x 200 µs) einen Impuls einer definierten Länge. Die Untersetzung beträgt also 1:n, wobei n jede ganze Zahl größer gleich 1 sein darf.
   - Komponente 8 vom Rückwandbus generiert mit jedem p-ten Takt (d.h. alle p x 200 µs) einen Impuls einer definierten Länge. Die Untersetzung beträgt also 1:p, wobei p jede ganze Zahl größer gleich 1 sein darf.
   - Komponente 5 von Feldbus 3 generiert mit jedem m-ten Takt (d.h. alle m x 200 µs) einen Impuls einer definierten Länge. Die Untersetzung beträgt also l:m, wobei m jede ganze Zahl größer gleich 1 sein darf.
   - usw.

Bekannt sind Lösungen zur Synchronisation von Taktschlägersignalen und der Uhrzeit von Komponenten innerhalb eines Bussystems mit Hilfe von Synchronisationstelegrammen. So beschreibt z.B. die DE 102 29 110 A1 ein Verfahren zur Synchronisation von Knoten eines Kommunikationssystems, wobei die Zeitbasis eines zu synchronisierenden Knotens basierend auf einer Abweichung zwischen einem aufgrund der Zeitbasis ermittelten Ist-Empfangszeitpunkt und dem Soll-Empfangszeitpunkt eines Synchronisationstelegramms nachgeregelt wird.

Der Standard IEEE 1588 beschreibt ein Uhrzeit-Synchronisationsverfahren, mit dem sich die Uhrzeiten von Komponenten in unterschiedlichen Netzwerken (über Switches bzw. Router gekoppelt) synchronisieren lassen. Das Verfahren basiert auf zwei Telegrammen, die zyklisch gesendet werden. Ein Sync-Telegramm übermittelt den geschätzten Sendezeitpunkt des Sync-Telegramms und das anschließende Follow-Up-Telegramm den exakten Sendezeitpunkt des Sync-Telegramms.

Profinet synchronisiert den Taktschläger und die Uhrzeit von Feldbuskomponenten mit einem modifizierten Sync-/Follow-Up-Telegrammverfahren. Zusätzlich wird auch die Synchronisation der Feldbuskomponenten mit einem einzigen Synchronisationstelegramm unterstützt. In beiden Fällen erfolgt die Synchronisation zyklisch. Der Taktschläger kann in jeder Profinet-Komponente um einen beliebigen Faktor übersetzt und untersetzt werden.

Der Erfindung liegt die Aufgabe zugrunde, ein Verfahren anzugeben, mit dem die Uhrzeit bzw. der Taktschläger von Komponenten in mehreren gekoppelten Bussystemen synchronisiert werden können, wobei der Uhrzeit- bzw. Taktschläger-Master eine beliebige Komponente sein kann.

Diese Aufgabe wird bei einem Verfahren der eingangs genannten Art durch folgende Verfahrensschritte gelöst:
- Eine beliebige Komponente wird als globaler Uhrzeit- bzw. Taktschläger-Master gewählt,
- der globale Uhrzeit- bzw. Taktschläger-Master synchronisiert zunächst die Komponenten des Bussystems, dem er angehört,
- bereits synchronisierte Komponenten, die zugleich Bestandteil eines weiteren Bussystems sind, dessen Komponenten noch nicht synchronisiert sind, fungieren als lokale Uhrzeit- bzw. Taktschläger-Master für das betreffende weitere Bussystem und
- der letzte Verfahrensschritt wird bei Vorhandensein noch unsynchronisierter Komponenten wiederholt.

Somit wird bei der Uhrzeit- bzw. Taktschläger-Synchronisation die Uhrzeit bzw. der Taktschläger aller Komponenten an den verschiedenen gekoppelten Bussystemen, wie beispielsweise mehreren über einen Rückwandbus gekoppelten Feldbussen, auf die Uhrzeit bzw. den Taktschläger eines globalen Uhrzeit- bzw. Taktschläger-Masters synchronisiert. Der globale Uhrzeit- bzw. Taktschläger-Master kann dabei sowohl eine Komponente eines Feldbusses als auch eines Rückwandbusses sein. Der globale Uhrzeit- bzw. Taktschläger-Master synchronisiert zunächst die anderen Komponenten des Feldbusses oder Rückwandbusses, dem er angehört. Die Komponenten des Busses vom globalen Uhrzeit- bzw. Taktschläger-Master, die sowohl Bestandteil eines Feldbusses als auch eines Rückwandbusses sind, sind lokale Uhrzeit- bzw. Taktschläger-Master von dem am Bus des globalen Uhrzeit- bzw. Taktschläger-Masters angeschlossenen Bussystem.

Mit der Uhrzeit-Synchronisation kann somit eine Uhrzeit eingestellt werden, die für alle gekoppelten Bussysteme gültig ist. Damit sind einheitliche Zeitstempel realisierbar. Die Taktschläger-Synchronisation erlaubt bei den Komponenten z.B. aller an einem Rückwandbus angeschlossenen Feldbusse und bei jeder Rückwandbus-Komponente die Ausführung vordefinierter Aktionen zu synchronisierten Taktschläger-Zeitpunkten.

In einer vorteilhaften Ausführungsform erfolgt die Synchronisation der Uhrzeit bzw. der Taktschläger der Komponenten der Bussysteme auf die Uhrzeit bzw. des Taktschlägers des globalen Uhrzeit- bzw. Taktschläger-Masters mit Hilfe von Uhrzeit- bzw. Taktschläger-Synchronisationstelegrammen, die zyklisch gesendet werden. Durch diese regelmäßige Synchronisierung wird dafür gesorgt, dass mögliche Abweichungen klein und somit die Uhrzeit bzw. die Taktschläger der Komponenten innerhalb einer gewünschten Genauigkeit bleiben.

In einer weiteren vorteilhaften Ausführungsform wird in zumindest einem Bussystem als Synchronisationsverfahren das Sync-/Follow-Up-Telegrammverfahren verwendet. Dieses Verfahren ist aus dem Standard IEEE 1588 bekannt, seine Implementierung daher entsprechend unproblematisch. Die Synchronisationsverfahren der einzelnen Bussysteme dürfen sich hierbei unterscheiden. Zum Beispiel kann ein Feldbus seine Komponenten mit zyklischen Sync-/Follow-Up-Telegrammfolgen synchronisieren, während der Rückwandbus oder ein anderer Feldbus seine Komponenten mit jeweils einem anderen Verfahren synchronisiert.

In einer weiteren vorteilhaften Ausführungsform erfolgt in zumindest einem Bussystem die Synchronisation mit einem einzigen speziellen Uhrzeit- bzw. Taktschläger-Synchronisationstelegramm, das zyklisch gesendet wird. Die Synchronisationsverfahren der einzelnen Bussysteme dürfen sich hierbei unterscheiden. Zum Beispiel kann ein Feldbus seine Komponenten mit zyklischen Sync-/Follow-Up-Telegrammfolgen synchronisieren, während der Rückwandbus oder ein anderer Feldbus seine Komponenten mit jeweils einem anderen Verfahren synchronisiert. So kann beispielsweise die Uhrzeit- bzw. Taktschläger-Synchronisation der Komponenten am Rückwandbus mit einem einzigen speziellen Uhrzeit- bzw. Taktschläger-Synchronisationstelegramm, das zyklisch gesendet wird, erfolgen. Eine Sync-/Follow-Up-Telegrammfolge ist am Rückwandbus somit nicht erforderlich.

In einer weiteren vorteilhaften Ausführungsform erfolgt die Synchronisation eines Taktschlägers eines Bussystems auf den Taktschläger eines anderen Bussystems in der Komponente, die beiden Bussystemen angehört, durch Vorgabe eines auf ein periodisches Ereignis bezogenen Offsets, wobei der Offset des Taktschlägers vom Taktschläger-Master zu diesem periodischen Ereignis gemessen und mit einem parametrierten Sollwert verglichen wird und wobei anschließend der Zyklus im zu synchronisierenden Bussystem durch einen Regelungsalgorithmus falls erforderlich verkürzt oder verlängert wird, um die Abweichungen des Soll- und Ist-Wertes vom Offset zu minimieren. Eine Kenntnis der Untersetzung des Taktschlägers vom Taktschläger-Master in Bezug auf die Periode des Zyklus vom Bussystem, dessen Taktschläger zu synchronisieren ist, ist nicht erforderlich. Eine Komponente, die Taktschläger-Slave eines Bussystems ist, kann somit als Taktschläger-Master eines anderen Bussystems die Taktschläger beider Busse synchronisieren.

In einer weiteren vorteilhaften Ausführungsform erfolgt die Taktschläger-Synchronisation der Komponenten mit einem speziellen Taktschläger-Synchronisationstelegramm, das von den Komponenten benötigte Informationen enthält, um den Taktschläger um einen beliebigen Faktor untersetzen zu können. Dabei ist in jedem Taktschläger-Slave der Untersetzungsfaktor individuell einstellbar. Jeder Taktschläger-Slave am Rückwandbus, der auch Komponente eines Feldbusses ist, kann wiederum Taktschläger-Master für diesen Feldbus sein. Die Synchronisation der Taktschläger beim Übergang vom Rückwandbus zum Feldbus kann wieder wie oben beschrieben erfolgen.

Im Folgenden wird die Erfindung anhand des in der Figur dargestellten Ausführungsbeispiels näher beschrieben und erläutert. Es zeigt:

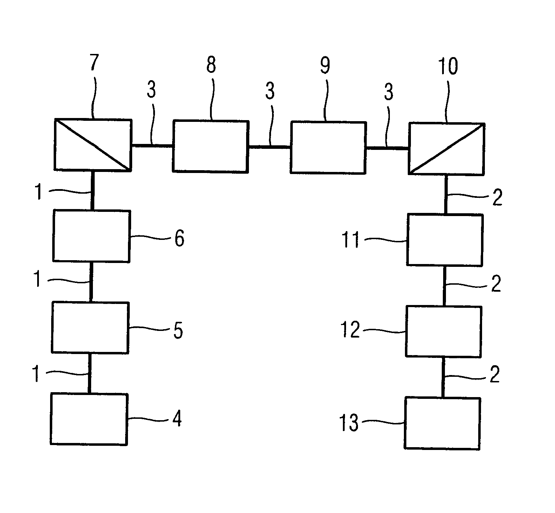

- FIG 1: zwei Feldbusse, die über einen Rückwandbus gekoppelt sind.

Fig 1 zeigt einen ersten Feldbus 1 und einen zweiten Feldbus 2, die über einen Rückwandbus 3 gekoppelt sind. Die verschiedenen Bussysteme enthalten die Komponenten 4-13. Dabei sind die Komponenten 4-6 bzw. 11-13 Bestandteile des ersten 1 bzw. zweiten 2 Feldbusses, die Komponenten 8, 9 hingegen Bestandteil des Rückwandbusses 3. Komponente 7 ist sowohl Bestandteil des ersten Feldbusses 1 als auch des Rückwandbusses 3, Komponente 10 ist zugleich Bestandteil des zweiten Feldbusses 2 und des Rückwandbusses 3. Für die Synchronisation (der Uhrzeit und/oder der Taktschläger) wird ohne Beschränkung der Allgemeinheit Komponente 5 des ersten Feldbusses 1 als globaler Master gewählt. Der globale Master 5 synchronisiert nun zunächst die anderen Komponenten 4, 6, 7 des Bussystems 1, dem er angehört. Die nun synchronisierte Komponente 7, die zugleich Bestandteil des Rückwandbusses 3 ist, fungiert jetzt als lokaler Master für den Rückwandbus 3 und synchronisiert die Komponenten 8-10. Die Synchronisationsverfahren der gekoppelten Bussystem (Feldbus 1, Rückwandbus 3) dürfen sich dabei unterscheiden. Zum Beispiel kann der Feldbus 1 seine Komponenten 4-7 mit zyklischen Sync-/Follow-Up-Telegrammfolgen synchronisieren, während der Rückwandbus 3 seine Komponenten 8-10 mit einem anderen Verfahren - wie mit einem speziellen Synchronisationstelegramm, das zyklisch gesendet wird, wobei eine Sync-/Follow-Up-Telegrammfolge am Rückwandbus 3 nicht erforderlich ist - synchronisiert.

Nach Synchronisation der Komponenten 8-10 im Rückwandbus 3 müssen nun noch die Komponenten 11-13 des zweiten Feldbusses 2 synchronisiert werden. Hierzu fungiert nun Komponente 10, die sowohl Bestandteil des (bereits synchronisierten) Rückwandbusses 3, als auch des zweiten Feldbusses 2 ist, als lokaler Master für den zweiten Feldbus 2. Auch hier kann sich wieder das Synchronisationsverfahren von Rückwandbus 3 und zweitem Feldbus 2 unterscheiden. Das hier beschriebene Verfahren setzte sich bei Vorhandensein noch weiterer gekoppelter Bussysteme genauso fort: Eine bereits synchronisierte Komponente 7, 10, die zugleich Bestandteil eines noch nicht synchronisierten Bussystems 3, 2 ist, fungiert als lokaler Master für die Komponenten 8-10, 11-13 des betreffenden Bussystems 3, 2.

Zusammenfassend betrifft die Erfindung ein Verfahren zur Synchronisation der Uhrzeit bzw. der Taktschläger von Komponenten in zumindest zwei gekoppelten Bussystemen. Der Erfindung liegt die Aufgabe zugrunde, ein Verfahren anzugeben, mit dem die Uhrzeit bzw. der Taktschläger von Komponenten in mehreren gekoppelten Bussystemen synchronisiert werden können, wobei der Uhrzeit- bzw. Taktschläger-Master eine beliebige Komponente sein kann. Diese Aufgabe wird dadurch gelöst, dass ein globaler Master zunächst die Komponenten des Bussystems, dem er angehört synchronisiert und dann die bereits synchronisierten Komponenten, die zugleich Bestandteil eines weiteren Bussystems sind, dessen Komponenten noch nicht synchronisiert sind, als lokale Master für das betreffende weitere Bussystem fungieren.

## Patentansprüche

1. Verfahren zur Synchronisation der Uhrzeit von Komponenten (4-13) in zumindest zwei gekoppelten Bussystemen (1-3) mit den Verfahrensschritten:
- Eine beliebige Komponente wird als globaler Uhrzeit-Master (5) gewählt,
- der globale Uhrzeit-Master (5) synchronisiert zunächst die Komponenten (4, 6, 7) des Bussystems (1), dem er angehört,
- bereits synchronisierte Komponenten (7), die zugleich Bestandteil eines weiteren Bussystems (3) sind, dessen Komponenten (8-10) noch nicht synchronisiert sind, fungieren als lokale Uhrzeit-Master (7) für das betreffende weitere Bussystem (3) und
- der letzte Verfahrensschritt wird bei Vorhandensein noch unsynchronisierter Komponenten (11-13) wiederholt.

2. Verfahren nach Anspruch 1,
wobei die Synchronisation der Uhrzeit der Komponenten (4, 6-13) der Bussysteme (1-3) auf die Uhrzeit des globalen Uhrzeit-Masters (5) mit Hilfe von Uhrzeit-Synchronisationstelegrammen erfolgt, die periodisch gesendet werden.

3. Verfahren nach Anspruch 1 oder 2,
wobei in zumindest einem Bussystem (1-3) als Synchronisationsverfahren das Sync-/Follow-Up-Telegrammverfahren verwendet wird.

4. Verfahren nach einem der vorhergehenden Ansprüche,
wobei in zumindest einem Bussystem (1-3) die Synchronisation mit einem einzigen speziellen Uhrzeit-Synchronisationstelegramm erfolgt, das periodisch gesendet wird.

5. Verfahren zur Synchronisation der Taktschläger von Komponenten (4-13) in zumindest zwei gekoppelten Bussystemen (1-3) mit den Verfahrensschritten:
- Eine beliebige Komponente wird als globaler Taktschläger-Master (5) gewählt,
- der globale Taktschläger-Master (5) synchronisiert zunächst die Komponenten (4, 6, 7) des Bussystems (1), dem er angehört,
- bereits synchronisierte Komponenten (7), die zugleich Bestandteil eines weiteren Bussystems (3) sind, dessen Komponenten (8-10) noch nicht synchronisiert sind, fungieren als lokale Taktschläger-Master (7) für das betreffende weitere Bussystem (3) und
- der letzte Verfahrensschritt wird bei Vorhandensein noch unsynchronisierter Komponenten (11-13) wiederholt.

6. Verfahren nach Anspruch 5,
wobei die Synchronisation der Taktschläger der Komponenten (4, 6-13) der Bussysteme (1-3) auf den Taktschläger des globalen Taktschläger-Masters (5) mit Hilfe von Taktschläger-Synchronisationstelegrammen erfolgt, die periodisch gesendet werden.

7. Verfahren nach Anspruch 5 oder 6,
wobei in zumindest einem Bussystem (1-3) als Synchronisationsverfahren das Sync-/Follow-Up-Telegrammverfahren verwendet wird.

8. Verfahren nach einem der Ansprüche 5 bis 7,
wobei in zumindest einem Bussystem (1-3) die Synchronisation mit einem einzigen speziellen Taktschläger-Synchronisationstelegramm erfolgt, das periodisch gesendet wird.

9. Verfahren nach einem der Ansprüche 5 bis 8,
- wobei die Synchronisation eines Taktschlägers eines Bussystems (1-3) auf den Taktschläger eines anderen Bussystems (1-3) in der Komponente (7, 10), die beiden Bussystemen (₁-3) angehört, durch Vorgabe eines auf ein periodisches Ereignis bezogenen Offsets erfolgt,
- wobei der Offset des Taktschlägers vom Taktschläger-Master (7, 10) zu diesem periodischen Ereignis gemessen und mit einem parametrierten Sollwert verglichen wird und
- wobei anschließend der Zyklus im zu synchronisierenden Bussystem (2, 3) durch einen Regelungsalgorithmus falls erforderlich verkürzt oder verlängert wird, um die Abweichungen des Soll- und Ist-Wertes vom Offset zu minimieren.

10. Verfahren nach einem der Ansprüche 5 bis 9,
wobei die Taktschläger-Synchronisation der Komponenten (4, 6-13) mit einem speziellen Taktschläger-Synchronisationstelegramm erfolgt, das von den Komponenten (4, 6-13) benötigte Informationen enthält, um den Taktschläger um einen beliebigen Faktor untersetzen zu können.
